# FASCICULE DE BREVET EUROPEEN

(11) **EP 2 145 499 B1**
(45) Date de publication et mention de la délivrance du brevet: **14.12.2011**
(21) Numéro de dépôt: 08736566.4
(22) Date de dépôt: 25.04.2008
(51) Int. Cl.: H04L 29/08

(54) **PROCÉDÉ DE FOURNITURE DE SERVICES PERSONNALISÉS À UN TERMINAL PAR UN RÉSEAU VISITÉ**
VERFAHREN ZUR ERMÖGLICHUNG DER BEREITSTELLUNG ANGEPASSTER DIENSTE FÜR EIN ENDGERÄT DURCH EIN BESUCHTES NETZ
METHOD ENABLING THE PROVISION OF CUSTOMISED SERVICES TO A TERMINAL BY A VISITED NETWORK

(30) Priorité: 27.04.2007 FR 0754734
(43) Date de publication de la demande: 20.01.2010
(73) Titulaire: Alcatel Lucent, 75008 Paris (FR)
(72) Inventeur: PIEKAREC, Sophie, 91940 Les Ulis (FR); AGHASARYAN, Armen, F-91600 Savigny-sur-Orge (FR); BETGE-BREZETZ, Stéphane, F-75015 Paris (FR); GONGUET, Arnaud, F-75013 Paris (FR)
(74) Mandataire: Chaffraix, Sylvain
(86) Numéro de dépôt international: PCT/EP2008/055041
(87) Numéro de publication internationale: WO 2008/135405

(56) Documents cités:
- EP-A- 1 322 130
- WO-A-00/56112
- US-A1- 2005 235 048
- DATABASE INSPEC [Online] THE INSTITUTION OF ELECTRICAL ENGINEERS, STEVENAGE, GB; 8 avril 2005 (2005-04-08), DROGEHORN O ET AL: "Personalised applications and services for a mobile user" XP002460112 Database accession no. 8605219 & PROCEEDINGS. ISADS 2005. 2005 INTERNATIONAL SYMPOSIUM ON AUTONOMOUS DECENTRALIZED SYSTEMS 4-8 APRIL 2005 CHENGDU, JIUZHAIGOU, CHINA, 8 avril 2005 (2005-04-08), pages 473-479, Proceedings. ISADS 2005. 2005 International Symposium on Autonomous Decentralized Systems (IEEE Cat. No. 05EX1007) IEEE Piscataway, NJ, USA ISBN: 0-7803-8963-8

## Description

L'invention a trait à la fourniture de services, tels que l'audio, la vidéo, les données et le multimédia, par un opérateur, via un réseau visité, à un terminal, fixe ou mobile.

Le changement temporaire d'opérateur constitue un problème majeur auquel sont confrontés tant les utilisateurs que les opérateurs, dans la mesure où il n'existe pas à ce jour de réseau universel : du fait de la multiplicité des réseaux et des services, il est difficile de réaliser une mobilité (physique ou commerciale) globale permettant à un utilisateur de bénéficier des mêmes services dans un réseau visité que dans son réseau d'abonnement.

S'agissant de la mobilité physique (itinérance), des efforts ont été faits en ce sens, pour les réseaux de mobiles, par l'Union Internationale des Télécommunications (UIT) avec l'IMT 2000 (International Mobile Telecommunication systems for the year 2000), qui se veut le standard global de la troisième génération (3G) des télécommunications sans fil.

Pour assurer l'itinérance, l'IMT 2000 propose d'attribuer à chaque utilisateur un numéro d'appel unique joignable partout dans le monde, ce qui implique l'allocation à chaque abonné d'un identifiant unique, dénommé IMUN (International Mobile User Number). En théorie, un abonné itinérant peut donc se voir offrir par un réseau visité les mêmes services que par son réseau d'abonnement.

En pratique toutefois, l'itinérance tarde à se mettre en place en raison de la diversité des technologies employées dans les réseaux nationaux ou régionaux certaines incompatibilités n'ayant pas encore été résolues. Des propositions ont été faites pour surmonter ces incompatibilités (cf. par exemple la demande de brevet américain US 2005/0235048), mais ces propositions apparaissent insuffisantes pour garantir la continuité des services d'un réseau à l'autre.

Des efforts ont également été faits pour augmenter la mobilité commerciale (c'est-à-dire la souscription, auprès d'un opérateur distinct de l'opérateur d'abonnement, de services à fournir au même utilisateur, éventuellement sur un même terminal). Citons par exemple la solution connue sous la dénomination TV-Card (marque déposée) : une carte à puce, utilisée par l'abonné à son domicile ou dans ses lieux de fréquentation habituelle, permet d'accéder à divers services proposés par une pluralité d'opérateurs de services. Cette solution implique toutefois qu'un équipement ad hoc soit installé dans chaque point d'accès, ce qui nécessite de coûteuses modifications des réseaux existants.

Le document WO00/56112 (TELEFONAKTIENBOLAGET AG ERICSSON), publie le 21 September 2000 enseigne une traduction de profils par une réseau visite a partir d'un profil du reseau d'abonnement de l'utilisateur

Le document XP002460112 IEEE 8 April 2005 (Drogehorn et al) "Personalised applications and services for a mobile user" enseigne la traduction de profils entre differentes ontologies en definissant des vues

Une partie des problèmes évoqués ci-dessus réside dans l'impossibilité de standardiser les données utilisateur (domaines d'intérêt, catégorie marketing, habitudes de services demandés, etc.), dans la mesure où ces données sont culturelles et peuvent correspondre à des standards propres à chaque opérateur.

L'invention vise à remédier aux inconvénients précités, en proposant une solution permettant de faciliter pour un utilisateur le changement, même temporaire, d'opérateur de services.

A cet effet, l'invention propose, suivant un premier objet, un procédé de fourniture de services à un terminal par un réseau visité, ce procédé comprenant les étapes suivantes comme défini dans la revendication 1 :
- connexion du terminal au réseau visité,
- identification du terminal par le réseau visité,
- connexion du réseau visité à un réseau d'abonnement auquel est rattaché le terminal, ce réseau d'abonnement intégrant un premier profil utilisateur comprenant des données utilisateur relatives au terminal et/ou à un utilisateur de celui-ci,
- extraction par le réseau visité de tout ou partie des données utilisateur,
- génération par le réseau visité d'un second profil utilisateur à partir des données extraites,
- fourniture des services par le réseau visité du terminal, en conformité avec le second profil utilisateur.

Ainsi, le réseau visité reconstitue un profil utilisateur à partir du profil utilisateur défini au sein du réseau d'abonnement. Grâce à cette reconstitution, le réseau visité est en mesure de fournir à l'abonné les services demandés sans passer par une procédure de communication par celui-ci des données utilisateur.

Suivant un mode de réalisation, l'extraction des données comprend une opération de mapping entre une première ontologie, selon laquelle est établi le premier profil utilisateur, et une seconde ontologie, selon laquelle est établi le second profil utilisateur, lequel peut être généré de manière temporaire.

Une étape supplémentaire peut être prévue, de mise à jour du second profil utilisateur, en fonction de la mise à jour du premier profil utilisateur.

Réciproquement, peut également être prévue une étape de mise à jour du premier profil utilisateur en fonction de la mise à jour du second profil utilisateur.

Suivant un mode de réalisation, chaque profil utilisateur se présente sous la forme d'un document XML.

L'invention propose, suivant un deuxième aspect, un système de communication pour la fourniture de services à un terminal comme défini dans la revendication 6, ce système comprenant un serveur localisé dans un réseau visité et comprenant un module de transcription d'un profil premier utilisateur correspondant audit terminal, mémorisé dans un serveur distant localisé dans un réseau d'abonnement auquel est rattaché le terminal, en un second profil utilisateur.

Ce module de transcription peut être est programmé pour réaliser un mapping entre une première ontologie selon laquelle est établi le premier profil utilisateur, et une seconde ontologie selon laquelle est établi le second profil utilisateur.

Suivant un troisième aspect, l'invention propose un produit programme d'ordinateur implémenté dans un serveur au sein d'un réseau visité comme défini dans la revendication 7, ce programme comprenant des instructions pour :
- identifier un terminal connecté au réseau visité,
- établir une connexion du réseau visité à un réseau d'abonnement auquel est rattaché le terminal, ce réseau d'abonnement intégrant un premier profil utilisateur comprenant des données utilisateur relatives au terminal et/ou à un utilisateur de celui-ci,
- extraire tout ou partie des données utilisateur,
- générer un second profil utilisateur à partir des données extraites,
- commander la fourniture de services par le réseau visité au terminal, en conformité avec le second profil utilisateur.

Ce programme comprend par exemple des instructions pour effectuer un mapping entre une première ontologie selon laquelle est établi le premier profil utilisateur, et une seconde ontologie selon laquelle est établi le second profil utilisateur.

D'autres objets et avantages de l'invention apparaîtront à la lumière de la description faite ci-après en référence aux dessins annexés dans lesquels :
- la figure 1 est un schéma montrant une architecture réseau permettant la fourniture de services à un terminal depuis un réseau visité ;
- la figure 2 est un schéma illustrant un mapping réalisé entre deux ontologies distinctes.

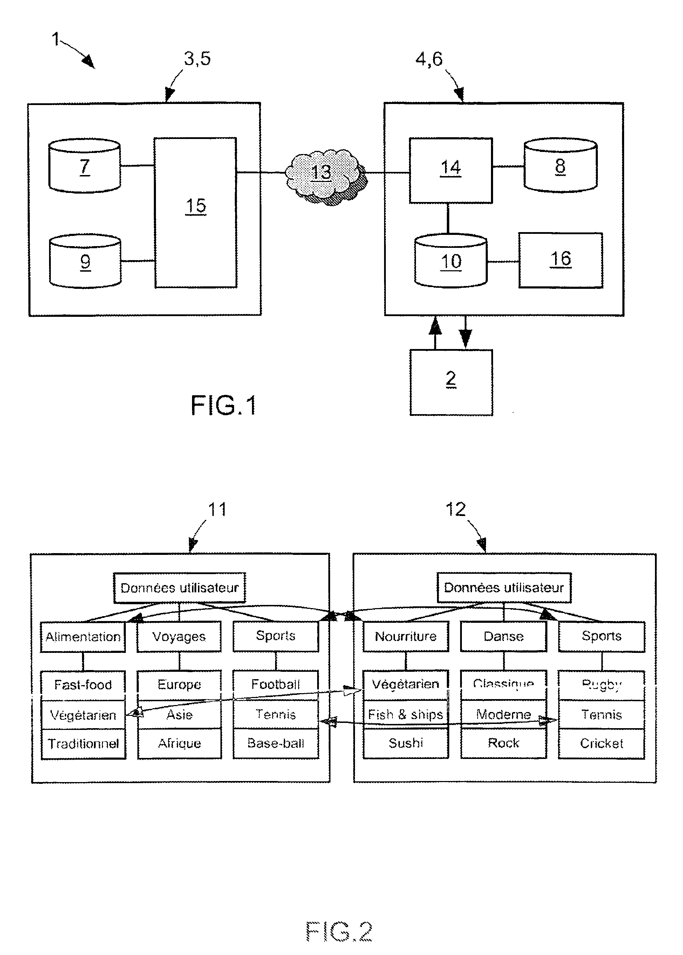

Sur la figure 1 est représentée une architecture réseau **1** à laquelle est reliée un terminal **2** fixe (tel qu'un ordinateur personnel ou un poste de télévision) ou mobile, tel qu'un Smartphone ou un PDA (Personal Digital Assistant) communicant.

L'architecture réseau **1** comprend :
- un réseau **3** d'abonnement auprès duquel le terminal **2** est enregistré, son utilisateur (également appelé abonné) ayant souscrit une fourniture de services auprès d'un opérateur habilité à fournir ces services via ce réseau **3** d'abonnement, et
- un réseau **4** visité, auprès duquel le termina! **2** n'est pas enregistré, c'est-à-dire que l'utilisateur n'a pas souscrit de fourniture de service auprès d'un opérateur utilisant ce réseau **4**.

On suppose toutefois que des accords ont été passés entre les opérateurs du réseau **3** d'abonnement et celui du réseau **4** visité, de sorte qu'il soit possible pour le terminal **2** de se connecter à ce dernier.

Comme cela est visible sur ia figure 1, le réseau **3** d'abonnement et le réseau **4** visité comprennent chacun une plateforme **5**, **6** sous forme d'un serveur - à partir de laquelle sont fournis les services, lesquels peuvent comprendre l'accès à l'Internet, la téléphonie, la télévision, et plus généralement la fourniture de médias tels que l'audio et la vidéo.

Comme cela est représenté schématiquement sur la figure 1, chaque plateforme **5**, **6** comprend une base de données **7**, **8** de profils. Dans la base de données de profil **7** de la plateforme **5** du réseau **3** d'abonnement est enregistré un premier profil utilisateur (profil principal) de l'abonné. La base de données **8** de profil de la plateforme **6** du réseau **4** visité est quant à elle destinée à recevoir, éventuellement de manière temporaire, un second profil utilisateur (profil secondaire) du même abonné, comme nous le verrons ci-après.

Un profil utilisateur se présente par exemple sous forme d'un document XML (eXtensible Markup Language) organisé sous forme d'une base de données hiérarchique établie selon une structure alogique propre à l'opérateur. Cette structure logique, appelée ontologie, définit, en les organisant, les critères constituant le profil utilisateur.

Ces critères peuvent se rapporter au terminal **2**. Ils peuvent alors concerner ses caractéristiques physiques et logicielles ainsi que ses performances, telles que ses capacités d'affichage ou de restitution sonore, sa bande passante, son système d'exploitation, les codecs dont il dispose, etc.

Ces critères permettent de définir les services quant à leur forme, c'est-à-dire quant aux paramètre physiques régissant les communications entre la plateforme **5**, **6** et le terminal **2** (débit, format des fichiers, etc.).

Ces critères peuvent également se rapporter à l'utilisateur en tant que personne. Ils peuvent dans ce cas concerner des données personnelles telles que son nom ou son adresse, ses préférences dans certains domaines (éventuellement culturels : centres d'intérêts, habitudes, comportements consommatoires) prédéfinis, ces données permettant de personnaliser les service, c'est-à-dire d'en sélectionner un certain nombre correspondant aux préférences de l'utilisateur.

Ces critères permettent de définir les services quant à leur fond, c'est-à-dire quant à leur contenu, afin de répondre aux attentes supposées - ou réelles - de l'utilisateur.

Dans l'exemple illustré, les oncologies tant du réseau **3** d'abonnement que du réseau **4** visité sont fondées sur des critères relatifs à l`utilisateur. Ces ontologies sont par exemple mémorisées dans des bases de données **9**, **10** dites ontologiques. Les ontologies du réseau 3 d'abonnement et du réseau **4** visité peuvent être différentes.

Ainsi, on a représenté côte à côte sur la figure 2 une première ontologie **11**, régissant les profils utilisateurs du réseau **3** d'abonnement, et une seconde ontologie **12** régissant les profils utilisateurs du réseau **4** visité.

La première ontologie **11** comprend en l'occurrence trois domaines différents : l'alimentation, les voyages et les sports. Pour chaque domaine, l'ontologie **11** comprend plusieurs critères descriptifs de préférences possibles (Fast food, Végétarien et Traditionnel pour l'Alimentation, Europe, Asie et Afrique pour les Voyages et Football, Tennis et Base-ball pour les Sports).

La seconde ontologie **12** comprend également trois domaines différents : la nourriture, la danse et les sports. Pour chaque domaine, l'ontologie **12** comprend plusieurs critères descriptifs de préférences possibles (Végétarien et Fish & Chips pour la Nourriture, Classique, Moderne et Rock pour la Danse et Rugby, Tennis et Cricket pour les Sports).

Lorsque le terminai **2** se connecte au réseau **4** visité en vue d'obtenir une fourniture de services, celui-ci commence par identifier le terminal **2** au moyen d'un identifiant propre à celui-ci (tel qu'un IMUN).

Le réseau **4** visité se connecte alors au réseau **3** d'abonnement, éventuellement par l'intermédiaire d'un réseau **13** métropolitain (MAN) étendu (WAN) tel que l'internet, pour accéder au profil utilisateur de l'abonné.

Le réseau **4** visité extrait, en totalité ou en partie, les données utilisateur listées dans le profil principal, et génère à partir de ces données un profil secondaire, sous la forme par exemple d'un document XML.

Dans la mesure où le réseau **4** visité ne correspond pas à l'opérateur principal de services auquel est rattaché le terminal **2**, le profil secondaire peut être généré de manière temporaire, pendant la durée de fourniture des services par le réseau **4** visité. Une fois la fourniture de services achevée, ce profil secondaire peut être archivé, ou même détruit.

Comme nous l'avons vu, les ontologies **11**, **12** sur lesquelles reposent les profils utilisateur du réseau **3** d'abonnement et du réseau **4** visité ne sont pas nécessairement les mêmes. Dans un tel cas, la création du profil secondaire ne peut être réalisée par simple reproduction du profil principal.

C'est pourquoi, pour extraire les données incluses dans le profil principal et permettre leur intégration dans le profil secondaire, le réseau **4** visité effectue une opération de mapping entre l'ontologie **11** du réseau **3** d'abonnement et l'ontologie **12** du réseau **4** visité. En d'autres termes, le réseau **4** visité réalise une cartographie comparée des deux ontologies **11**, **12** et établit des correspondances entre les domaines et critères sélectionnés pour chacune d'elles.

A cet effet, le réseau **4** visité comprend un module 14 de transcription de profil utilisateur, sous forme d'une application implémentée dans son serveur.

Ainsi, dans l'exemple illustré sur la figure 2, une correspondance est établie entre des domaines et critères non seulement identiques (Sports, Végétarien, Tennis), mais également synonymes (Alimentation - Nourriture). Grâce à ce mapping, le serveur du réseau **4** visité peut constituer son profil secondaire conformément à son ontologie **12** propre, par affectation, aux critères pour lesquels une correspondance a été établie, des données présentes dans le profil principal.

La constitution du profil secondaire peut être réalisée au moyen d'un module **15** de profilage sous forme d'une application logicielle dédiée, implémentée sur le serveur du réseau **4** visité et comprenant les instructions nécessaires à la mise en oeuvre des opérations décrites ci-dessus,

Le réseau **4** visité est alors en mesure de fournir les services souscrits au terminal **2**, en conformité avec ce profil et dans des conditions similaires à celles garanties par le service d'abonnement. Il en résulte, du point de vue de l'utilisateur, une meilleure continuité des services et une plus grande latitude dans le choix des opérateurs. Dés lors que ceux-ci ont passé des accords autorisant la communication entre eux des données de l'utilisateur, celui-ci peut par exemple avoir à choisir, pour certains services entre plusieurs opérateurs listés sur une interface graphique interactive.

L'architecture qui vient d'être décrite permet non seulement la constitution du profil secondaire, mais également sa mise à jour en fonction de la mise à jour du profil principal. A cet effet, le module **14** de transcription peut être programmé pour effectuer une surveillance régulière du profil principal et procéder, lorsque celui-ci évolue, aux ajustements nécessaires dans le profil secondaire.

Réciproquement, en équipant le réseau **3** d'abonnement d'un module 16 de transcription de profils, le profil principal peut bénéficier de mises à jour effectuées par le réseau **3** d'abonnement à partir des mises à jour du profil secondaire, effectuées en fonction d'actions entreprises par l'utilisateur vis-à-vis du réseau **4** visité.

Le réseau **3** d'abonnement procède à cet effet de la manière décrite ci-dessus, par mappage des ontologies **11**, **12**, extractions des données du profil secondaire et mise à jour du profil principal.

## Revendications

1. Procédé de fourniture de services à un terminal **(2)** par un réseau **(4)** visité, ce procédé comprenant les étapes suivantes :
- connexion du terminal **(2)** au réseau **(4)** visité,
- identification du terminal **(2)** par le réseau **(4)** visité,
- connexion du réseau **(4)** visité à un réseau **(3)** d'abonnement auquel est rattaché le terminal **(2)**, ce réseau **(4)** d'abonnement intégrant un premier profil utilisateur consistant en des données personnelles et/ou des données de préférences relatives à un utilisateur du terminal **(2)** et étant établi selon une première ontologie **(11)**,
- extraction par le réseau **(4)** visité de tout ou partie des données utilisateur,
- génération par le réseau **(4)** visité d'un second profil utilisateur à partir des données extraites, consistant en des données personnelles et/ou des données de préférences relatives audit utilisateur du terminal **(2)** et étant établi selon une seconde ontologie **(12)**,
- fourniture des services par le réseau visité au terminal **(2)**, en conformité avec le second profil utilisateur,
- l'étape d'extraction des données comprenant une opération de mapping entre la première ontologie **(11)** et la seconde ontologie **(12)**, chaque ontologie comprenant des domaines et plusieurs critères descriptifs de préférences possibles pour chaque domaine, en réalisant une cartographie comparée de la première ontologie **(11)** et de la seconde ontologie **(12)** et en établissant des correspondances entre des domaines et critères sélectionnés pour chacune des ontologies.

2. Procédé selon la revendication 1, dans lequel le second profil utilisateur est généré de manière temporaire.

3. Procédé selon la revendication 1 ou 2, qui comprend une étape de mise à jour du second profil utilisateur, en fonction de la mise à jour du premier profil utilisateur.

4. Procédé selon la revendication 3, qui comprend une étape de mise à jour du premier profil utilisateur en fonction de la mise à jour du second profil utilisateur.

5. Procédé selon l'une des revendications précédentes, dans lequel chaque profil utilisateur se présente sous la forme d'un document XML.

6. Système de communication pour la fourniture de services à un terminal **(2)**, ce système comprenant un serveur **(6)** localisé dans un réseau **(4)** visité, ce système étant **caractérisé en ce que** ledit serveur **(6)** comprend un module **(14)** de transcription d'un premier profil utilisateur correspondant audit terminal **(2)**, consistant en des données personnelles et/ou des données de préférences relatives à un utilisateur du terminal **(2)** et étant établi selon une première ontologie **(11)**, ledit premier profil utilisateur étant mémorisé dans un serveur **(5)** distant localisé dans un réseau **(3)** d'abonnement auquel est rattaché le terminal **(2)**, en un second profil utilisateur consistant en des données personnelles et/ou des données de préférences relatives audit utilisateur du terminal **(2)** et étant établi selon une seconde ontologie **(12)**, chaque ontologie comprenant des domaines et plusieurs critères descriptifs de préférences possibles pour chaque domaine, la transcription de profil étant exécutée en réalisant une cartographie comparée de la première ontologie **(11)** et de la seconde ontologie **(12)** et en établissant des correspondances entre des domaines et critères sélectionnés pour chacune des ontologies.

7. Produit programme d'ordinateur implémenté dans un serveur **(6)** au sein d'un réseau **(4)** visité, ce programme comprenant des instructions pour :
- identifier un terminal **(2)** connecté au réseau **(4)** visité,
- établir une connexion du réseau **(4)** visité à un réseau **(3)** d'abonnement auquel est rattaché le terminal **(2)**, ce réseau **(3)** d'abonnement intégrant un premier profil utilisateur consistant en des données personnelles et/ou des données de préférences relatives à un utilisateur du terminal **(2)** et étant établi selon une première ontologie **(11)**,
- extraire tout ou partie des données utilisateur,
- générer un second profil utilisateur à partir des données extraites,
- commander la fourniture de services par le réseau visité au terminal **(2)**, en conformité avec le second profil utilisateur consistant en des données personnelles et/ou des données de préférences relatives audit utilisateur du terminal **(2)** et étant établi selon une seconde ontologie **(12)**,
- l'étape d'extraction des données comprenant une opération de mapping entre la première ontologie **(11)** et la seconde ontologie **(12)**, chaque ontologie comprenant des domaines et plusieurs critères descriptifs de préférences possibles pour chaque domaine, en réalisant une cartographie comparée de la première ontologie **(11)** et de la seconde ontologie **(12)** et en établissant des correspondances entre des domaines et critères sélectionnés pour chacune des ontologies.

## Claims

1. A method for the provision of services to a terminal (2) by a visited network (4), which method comprises the following steps:
- the connection of the terminal (2) to the visited network (4),
- the identification of the terminal (2) by the visited network (4),
- the connection of the visited network (4) to a subscription network (3) to which the terminal (2) is connected, this subscription network (4) incorporating a first user profile consisting of personal data and/or preference data related to a user of the terminal (2) and being established according to a first ontology (11),
- the extraction of all or some of the user data by the visited network (4),
- the generation, by the visited network (4), of a second user profile based on the extracted data, consisting of personal data and/or preference data related to said user of the terminal (2) and being established according to a second ontology (12),
- the provision of services to a terminal (2) by a visited network (4) in accordance with the second user profile,
- the step of extracting data comprising a mapping operation between the first ontology (11) and the second ontology (12), each ontology comprising domains and several possible descriptive preference criteria for each domain, by creating a map comparing the first ontology (11) and the second ontology (12) and by establishing matches between domains and criteria selected for both of the ontologies.

2. A method according to claim 1, wherein the second user profile is generated temporarily.

3. A method according to claim 1 or 2, which comprises a step of updating the second user profile, in accordance with the updating of the first user profile.

4. A method according to claim 3, which comprises a step of updating the first user profile, in accordance with the updating of the second user profile.

5. A method according to any one of the preceding claims, wherein each user profile comes in the form of an XML document.

6. A communication system for providing services to a terminal (2), which system comprises a server (6) located within a visited network (4), this system being **characterized in that** said server (6) comprises a module (14) to transcribe a first user profile corresponding to said terminal (2), consisting of personal data and/or preference data related to a user of the terminal (2), and being established in accordance with a first ontology (11), said first user profile being saved in a remote server (5) located within a subscription network (3) to which the terminal (2) is connected, and a second user profile consisting of personal data and/or preference data related to said user of the terminal (2), and being established according to a second ontology (12), each ontology comprising domains and multiple possible descriptive preference criteria for each domain, the profile transcribing being executed by creating a map comparing the first ontology (11) and the second ontology (12) and by establishing matches between domains and criteria selected for both of the ontologies.

7. A computer program product implemented in a server (6) within a visited network (4), which program comprises instructions to:
- identify a terminal (2) connected to the visited network (4),
- establish a connection between the visited network (4) and a subscription network (3) to which the terminal (2) is connected, this subscription network (3) incorporating a first user profile consisting of personal data and/or preference data related to a user of the terminal (2) and being established according to a first ontology (11), extract all or some of the user data,
- generate a second user profile from the extracted data,
- order the provision of services to a terminal (2) by the visited network (4), in accordance with the second user profile consisting of personal data and/or preference data related to said user of the terminal (2) and being established according to a second ontology (12),
- the step of extracting data comprising a mapping operation between the first ontology (11) and the second ontology (12), each ontology comprising domains and multiple possible descriptive preference criteria for each domain, by creating a map comparing the first ontology (11) and the second ontology (12) and by establishing matches between domains and criteria selected for both of the ontologies.

## Patentansprüche

1. Verfahren zur Bereitstellung von Diensten an ein Endgerät (2) durch ein besuchtes Netzwerk (4), wobei das besagte Verfahren die folgenden Schritte umfasst:
- Verbinden des Endgeräts (2) mit dem besuchten Netzwerk (4), Identifizieren des Endgeräts (2) durch das besuchte Netzwerk (4),
- Verbinden des besuchten Netzwerks (4) mit einem Teilnehmernetzwerk (3), welchem das Endgerät (2) angehört, wobei das besagte Teilnehmernetzwerk (4 3) ein gemäß einer ersten Ontologie (11) erstelltes erstes Benutzerprofil, bestehend aus den Benutzer des Endgeräts (2) betreffenden persönlichen Daten und/oder Präferenzdaten, integriert,
- Extrahieren, durch das besuchte Netzwerk (4), aller oder eines Teils der Benutzerdaten,
- Erzeugen, durch das besuchte Netzwerk (4) und ausgehend von den extrahierten Daten, eines gemäß einer zweiten Ontologie (12) erstellten zweiten Benutzerprofils, bestehend aus persönlichen Daten und/oder Präferenzdaten, welche den besagten Benutzer des Endgeräts (2) betreffen,
- Bereitstellen der Dienste durch das besuchte Netzwerk an das Endgerät (2) gemäß dem zweiten Benutzerprofil,
- wobei der Schritt des Extrahierens der Daten einen Abbildungsvorgang zwischen der ersten Ontologie (11) und der zweiten Ontologie (12) umfasst, wobei jede Ontologie Bereiche und mehrere Kriterien, welche die für jeden Bereich möglichen Präferenzen beschreiben, umfasst, indem eine vergleichende Kartografie der ersten Ontologie (11) und der zweiten Ontologie (12) erstellt wird und Korrespondenzen zwischen den für eine jede der Ontologien ausgewählten Bereichen und Kriterien für eine jede der Ontologien hergestellt werden.

2. Verfahren nach Anspruch 1, wobei das zweite Benutzerprofil vorläufig erzeugt wird.

3. Verfahren nach Anspruch 1 oder 2, umfassend einen Schritt des Aktualisierens des zweiten Benutzerprofils gemäß der Aktualisierung des ersten Benutzerprofils.

4. Verfahren nach Anspruch 3, umfassend einen Schritt des Aktualisierens des ersten Benutzerprofils gemäß der Aktualisierung des zweiten Benutzerprofils.

5. Verfahren nach einem beliebigen der vorstehenden Ansprüche, wobei jedes Benutzerprofil in der Form eines XML-Dokuments dargestellt wird.

6. Kommunikationssystem zur Bereitstellung von Diensten an ein Endgerät (2), wobei das System einen Server (6) umfasst, welcher sich in einem besuchten Netzwerk (4) befindet, wobei das besagte System **dadurch gekennzeichnet ist, dass** der besagte Server (6) ein Modul (14) für die Umsetzung eines dem besagten Endgerät (2) entsprechenden und gemäß einer ersten Ontologie (11) erstellten ersten Benutzerprofils, bestehend aus persönlichen Daten und/oder Präferenzdaten in Bezug auf einen Benutzer des Endgeräts (2), wobei das besagte erste Benutzerprofil in einem entfernten Server (5), der sich in einem Teilnehmernetzwerk (3), welchem das Endgerät (2) angehört, befindet, gespeichert ist, in ein gemäß einer zweiten Ontologie (12) erstelltes zweites Benutzerprofil, bestehend aus persönlichen Daten und/oder Präferenzdaten in Bezug auf den besagten Benutzer des Endgeräts (2), umfasst, wobei jede Ontologie Bereiche und mehrere Kriterien, welche die für jeden Bereich möglichen Präferenzen beschreiben, umfasst, wobei die Umsetzung des Profils durch das Erstellen einer vergleichenden Kartografie der ersten Ontologie (11) und der zweiten Ontologie (12) und durch das Herstellen der Korrespondenzen zwischen ausgewählten Bereichen und Kriterien für eine jede der Ontologien erfolgt.

7. Computerprogramm-Produkt, implementiert in einem Server (6) innerhalb eines besuchten Netzwerks (4), wobei das Programm Befehle umfasst für
- die Identifikation eines mit dem besuchten Netzwerk (4) verbundenen Endgeräts (2),
- den Aufbau einer Verbindung des besuchten Netzwerks (4) mit einem Teilnehmernetzwerk (3), welchem das Endgerät (2) angehört, wobei das besagte Teilnehmernetzwerk (3) ein gemäß einer ersten Ontologie (11) erstelltes erstes Benutzerprofil, bestehend aus persönlichen Daten und/oder Präferenzdaten in Bezug auf einen Benutzer des Endgeräts (2), integriert,
- das Extrahieren aller oder eines Teils der Benutzerdaten,
- das Erzeugen eines zweiten Benutzerprofils ausgehend von den extrahierten Daten,
- das Befehlen der Bereitstellung von Diensten durch das besuchte Netzwerk an das Endgerät (2) gemäß dem gemäß einer zweiten Ontologie (12) erstellten zweiten Benutzerprofil, bestehend aus persönlichen Daten und/oder Präferenzdaten in Bezug auf den besagten Benutzer des Endgeräts (2),
- den Schritt des Extrahierens der Daten, einschließlich eines Abbildungsvorgangs zwischen der ersten Ontologie (11) und der zweiten Ontologie (12), wobei jede Ontologie Bereiche und mehrere Kriterien, welche die für jeden Bereich möglichen Präferenzen beschreiben, umfasst, durch das Erstellen einer vergleichenden Kartografie der ersten Ontologie (11) und der zweiten Ontologie (12) und durch das Herstellen der Korrespondenzen zwischen für eine jede der Ontologien ausgewählten Bereichen und Kriterien.
